# EUROPÄISCHE PATENTSCHRIFT

(11) **EP 0 935 707 B1**
(45) Veröffentlichungstag und Bekanntmachung des Hinweises auf die Patenterteilung: **09.04.2003**
(21) Anmeldenummer: 98940058.5
(22) Anmeldetag: 26.06.1998
(51) Int. Cl.: F02M 61/12, F02M 61/16, F02M 51/06

(54) **BRENNSTOFFEINSPRITZVENTIL**
FUEL INJECTION VALVE
INJECTEUR DE CARBURANT

(30) Priorität: 22.08.1997 DE 19736684
(43) Veröffentlichungstag der Anmeldung: 18.08.1999
(73) Patentinhaber: ROBERT BOSCH GMBH, 70442 Stuttgart (DE)
(72) Erfinder: MÜLLER, Martin, D-71696 Möglingen (DE); HEROLD, Stefan, D-96103 Hallstadt (DE); RIEFENSTAHL, Jochen, D-96123 Litzendorf (DE); BRÜCKNER, Reinhold, D-96123 Litzendorf (DE); FISCHBACH, Dirk, D-96049 Bamberg (DE); EICHENDORF, Andreas, D-73614 Schorndorf (DE); BÜHNER, Martin, D-71522 Backnang (DE); NORGAUER, Rainer, D-71642 Ludwigsburg (DE); VIRNEKÄS, Jürgen, D-96151 Breitbrunn (DE); SCHRAMM, Peter, D-97478 Knetzgau (DE); WEIDLER, Hans, D-96175 Pettstadt (DE); PREUSSNER, Christian, D-71706 Markgröningen (DE); KEIL, Thomas, D-96050 Bamberg (DE); KIRSTEN, Oliver, D-95326 Kulmbach (DE); MARTIN, Ottmar, D-71735 Hochdorf/Eberdingen (DE); LEUSCHNER, Wolfgang, D-91330 Eggolsheim (DE)
(86) Internationale Anmeldenummer: DE9801758
(87) Internationale Veröffentlichungsnummer: WO99010648

(56) Entgegenhaltungen:
- EP-A- 0 042 799
- EP-A- 0 387 085
- US-A- 4 274 598
- US-A- 4 971 254
- US-A- 5 044 561
- US-A- 5 209 408

## Beschreibung

### Stand der Technik

Die Erfindung geht aus von einem Brennstoffeinspritzventil nach der Gattung des Hauptanspruchs.

Aus der DE-PS 39 43 005 ist bereits ein elektromagnetisch betätigbares Brennstoffeinspritzventil bekannt, bei dem im Sitzbereich mehrere scheibenförmige Elemente angeordnet sind. Bei Erregung des Magnetkreises wird eine als Flachanker fungierende flache Ventilplatte von einer mit ihr zusammenwirkenden gegenüberliegenden Ventilsitzplatte abgehoben, die gemeinsam ein Plattenventilteil bilden. Stromaufwärts der Ventilsitzplatte ist ein Drallelement angeordnet, das den zum Ventilsitz strömenden Brennstoff in eine kreisförmige Drehbewegung versetzt. Eine Anschlagplatte begrenzt den axialen Weg der Ventilplatte auf der der Ventilsitzplatte gegenüberliegenden Seite. Die Ventilplatte wird mit großem Spiel von dem Drallelement umgeben; eine gewisse Führung der Ventilplatte übernimmt damit das Drallelement. Außerdem ist zwischen der Anschlagplatte und dem Drallelement noch ein Abstandselement vorgesehen, das eine innere Öffnung aufweist, in der die Ventilplatte mit großem Spiel geführt wird. Das Drallelement, das Abstandselement und die Anschlagplatte liegen aufeinander auf und sind gehäusefest im Ventil eingebaut.

Des weiteren ist aus der DE-PS 33 01 501 schon ein Brennstoffeinspritzventil bekannt, bei dem eine axial bewegliche Ventilnadel einen Ventilschließabschnitt aufweist, der mit einer Ventilsitzfläche eines Ventilsitzeinsatzes zum Öffnen und Schließen des Ventils zusammenwirkt. Stromaufwärts seiner Ventilsitzfläche weist der Ventilsitzeinsatz eine Führungsöffnung auf, in der die Ventilnadel geführt wird. Neben dem Ventilsitzeinsatz ist im Düsengehäuse des Einspritzventils noch eine separat zum Ventilsitzeinsatz ausgebildete Führungsscheibe vorgesehen, die an einer Schulter des Düsengehäuses anliegt. Eine zwischen der Führungsscheibe und dem Ventilsitzeinsatz angeordnete Feder sorgt dafür, daß beide Bauteile in genau entgegengesetzter Richtung in gewünschte Positionen im Düsengehäuse gedrückt werden. Die Federverspannung der Führungsscheibe erfolgt aufgrund der räumlichen Anordnung der Feder somit vom Ventilsitzeinsatz weg gegen die dem Ventilsitzeinsatz gegenüberliegende Schulter im Gehäuse. Die Führungsscheibe bildet mit ihrer Führungsöffnung eine obere Führung für die Ventilnadel, wobei die Führungsscheibe durch die zwischen ihr und dem Ventilsitzeinsatz liegende Feder weit vom Ventilsitz entfernt ist.

Aus der US 4,274,598 A ist bereits ein Brennstoffeinspritzventil für Brennstoffeinspritzanlagen von Brennkraftmaschinen bekannt, das mit einem elektromagnetischen Kreis, mit einer axial entlang einer Ventillängsachse bewegbaren Ventilnadel, die einen Ventilschließabschnitt aufweist, der zum Öffnen und Schließen des Ventils mit einem festen Ventilsitz zusammenwirkt, der an einem Ventilsitzelement ausgebildet ist, und mit einem stromaufwärts des Ventilsitzelements angeordneten separaten Führungselement, das eine innere Führungsöffnung aufweist, in der die Ventilnadel axial bewegbar ist, ausgeführt ist. Außerdem weist das Brennstoffeinspritzventil eine an dem Führungselement angreifende Druckfeder in Form einer Tellerfeder auf, wobei die Druckfeder gegenüber dem Führungselement derart eingebaut ist, dass die Federverspannung des Führungselements durch die Wirkrichtung der Druckfeder zu dem Ventilsitzelement hin erfolgt. Zwischen dem Führungselement und dem Ventilsitzelement ist ein Drallelement in Form eines ringförmigen Körpers angeordnet, so dass das Führungselement mittels der Druckfeder unmittelbar gegen das Drallelement und letztlich gegen das Ventilsitzelement gedrückt wird. In dem als Drallelement dienenden ringförmigen Körper sind zwei tangential verlaufende Bohrungen eingebracht, die in einer um die Ventilnadel herum gebildeten ringförmigen Drallkammer enden. Die beiden Bohrungen sind dabei in einem mittleren Bereich des Drallelements bezüglich seiner axialen Erstreckung waagerecht ausgebildet. Die Bohrungen sind als Zumessbohrungen mit genau kalibriertem Durchmesser ausgeführt, parallel zueinander angeordnet und je um ein einheitliches Maß gegenüber einer Längsachse des Ventils versetzt. Eine Beeinflussung der Fluidströmung in den Drallbohrungen des Drallelements kann dabei in keinster Weise durch das gegen das Drallelement federverspannte Führungselement erfolgen.

### Vorteile der Erfindung

Das erfindungsgemäße Brennstoffeinspritzventil mit den kennzeichnenden Merkmalen des Hauptanspruchs hat den Vorteil, daß es auf besonders einfache Art und Weise kostengünstig herstellbar ist. Durch seinen besonders einfachen Aufbau mit nur einer inneren maßgenauen Führungsöffnung ist das Führungselement sehr einfach herstellbar. Alle anderen Abmaße des Führungselements können mit deutlich größeren Toleranzen versehen werden. In besonders vorteilhafter Weise dient das Führungselement weitgehend nur der Führung der es in der Führungsöffnung durchragenden Ventilnadel. Damit liegt eine Funktionstrennung zu den anderen stromabwärts folgenden Elementen vor.

In vorteilhafter Weise ist das Führungselement über eine Druckfeder "weich" im Gehäuse des Ventils federverspannt. Das im Gehäuse, z.B. in einem Ventilsitzträger, radial bewegliche Führungselement kann noch nach dem Befestigen des Ventilsitzelements gegenüber dem Ventilsitzelement ausgerichtet werden. Damit können auf einfache Weise eventuell auftretende geringe Maßabweichungen beim Befestigen (z.B. Verschweißen) des Ventilsitzelements noch mit dem Führungselement ausgeglichen werden. Durch die relative radiale Beweglichkeit des Führungselements gegenüber dem Ventilsitz nach dessen Fixierung liegt mit der Federverspannung des Führungselements eine untere selbstzentrierende Führungsanordnung nahe des Ventilsitzes vor. Insgesamt vereinfachen sich also deutlich die Vorgänge des Justierens bzw. des Positionierens. In vorteilhafter Weise befindet sich das separate Führungselement in der unmittelbaren Nähe des Ventilsitzelements, so daß die Ventilnadel sehr nahe ihres Ventilschließabschnitts noch ausgerichtet werden kann.

Der modulare Aufbau der Elemente und die damit verbundene Funktionstrennung hat den Vorteil, daß die einzelnen Bauteile sehr flexibel gestaltet werden können, so daß durch einfache Variation eines Elements unterschiedliche abzuspritzende Sprays (Spraywinkel, statische Abspritzmenge) erzeugbar sind.

Mit seiner unteren Stirnseite sorgt das Führungselement in vorteilhafter Weise jedoch neben der bereits oben beschriebenen Führungsfunktion zugleich auch für eine Abdeckung von Drallkanälen, die als Mittel zur Drallerzeugung stromabwärts der Führungsöffnung folgen.

Durch die in den Unteransprüchen aufgeführten Maßnahmen sind vorteilhafte Weiterbildungen und Verbesserungen des im Hauptanspruch angegebenen Brennstoffeinspritzventils möglich.

Von Vorteil ist es, das Führungselement in einer Ausnehmung eines Unterstützungselements unterzubringen. Das beispielsweise eine zylindrische Außenkontur aufweisende Unterstützungselement besitzt ebenso wie das Führungselement eine Führungsöffnung, in der die Ventilnadel axial bewegbar ist, wobei die Führungsöffnung des Unterstützungselements mit größerem Spiel zur Ventilnadel ausgebildet ist als die Führungsöffnung des Führungselements. Aufgrund des relativ großen Spiels zur Ventilnadel kann das Unterstützungselement kostengünstig hergestellt und montiert werden. Das Unterstützungselement dient zur Vorzentrierung der Ventilnadel bei der Montage und kann auch als "Notführung" verwendet werden. Wenn es durch Schmutz oder andere Ablagerungen dazu kommen sollte, daß das Führungselement an der Ventilnadel haften bleibt und sich axial mitbewegt, dann kann immer noch die Führungsöffnung des Unterstützungselements die Führung der Ventilnadel übernehmen.

In besonders vorteilhafter Weise ist stromabwärts des Führungselements ein scheibenförmiges Drallelement vorgesehen, das sehr einfach strukuriert und dadurch einfach ausformbar ist. Dem Drallelement kommt nur die Aufgabe zu, eine Drall- bzw. Drehbewegung im Brennstoff zu erzeugen und dabei möglichst störende Turbulenzen im Fluid nicht entstehen zu lassen. Alle anderen Ventilfunktionen übernehmen andere Bauteile des Ventils. So kann das Drallelement optimiert bearbeitet werden. Da es sich bei dem Drallelement um ein Einzelbauteil handelt, sind bei dessen Handhabung im Herstellungsprozess keine Einschränkungen zu erwarten. Im Vergleich zu Drallkörpern, die an einer Stirnseite Nuten oder ähnliche drallerzeugende Vertiefungen aufweisen, kann in dem Drallelement mit einfachsten Mitteln ein innerer Öffnungsbereich geschaffen werden, der sich über die gesamte axiale Dicke des Drallelements erstreckt und von einem äußeren umlaufenden Randbereich umgeben ist.

In vorteilhafter Weise wird eine gewünschte Verlängerung der Drallkanäle durch ein Krümmen oder Abknicken erreicht. Die hakenförmig abgeknickten Enden der Drallkanäle dienen als Sammeltaschen, die großflächig ein Reservoir zum turbulenzarmen Einströmen des Brennstoffs bilden. Nach der Strömungsumlenkung tritt der Brennstoff langsam und turbulenzarm in die eigentlichen tangentialen Drallkanäle ein, wodurch ein weitgehend störungsfreier Drall erzeugbar ist.

Neben der Herstellung des Drallelements aus einem Blech und dessen Bearbeitung durch Stanzen, Laserschneiden oder Drahterodieren kann es sehr vorteilhaft sein, das Drallelement durch galvanische Abscheidung aufzubauen. Mit dieser Herstellungstechnologie ist es einfach möglich, mehrlagige Drallelemente zu erzeugen, bei denen auf einer Grundplatte mehrere Erhebungen in gewünschter Form emporstehen, wobei zwischen den Erhebungen Drallkanäle gebildet sind.

### Zeichnung

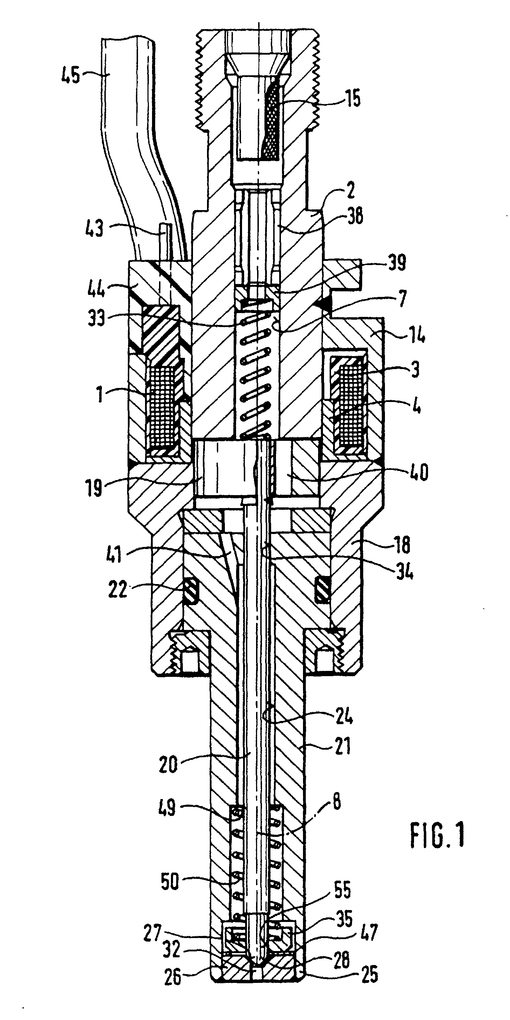

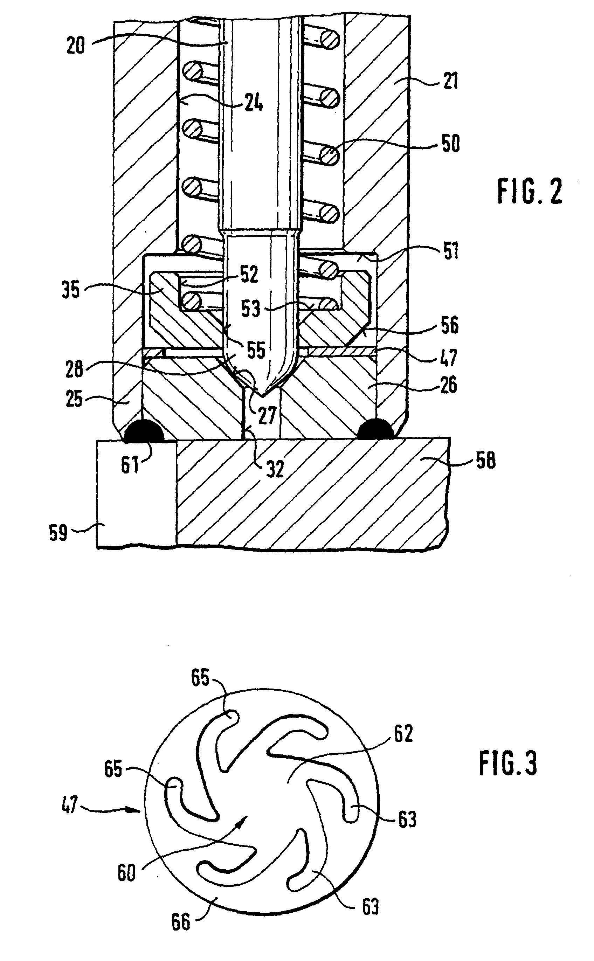

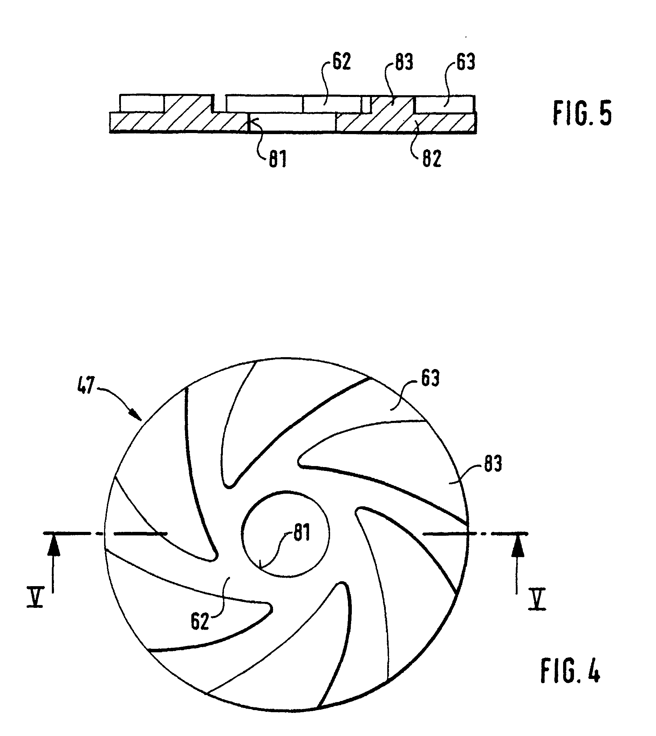

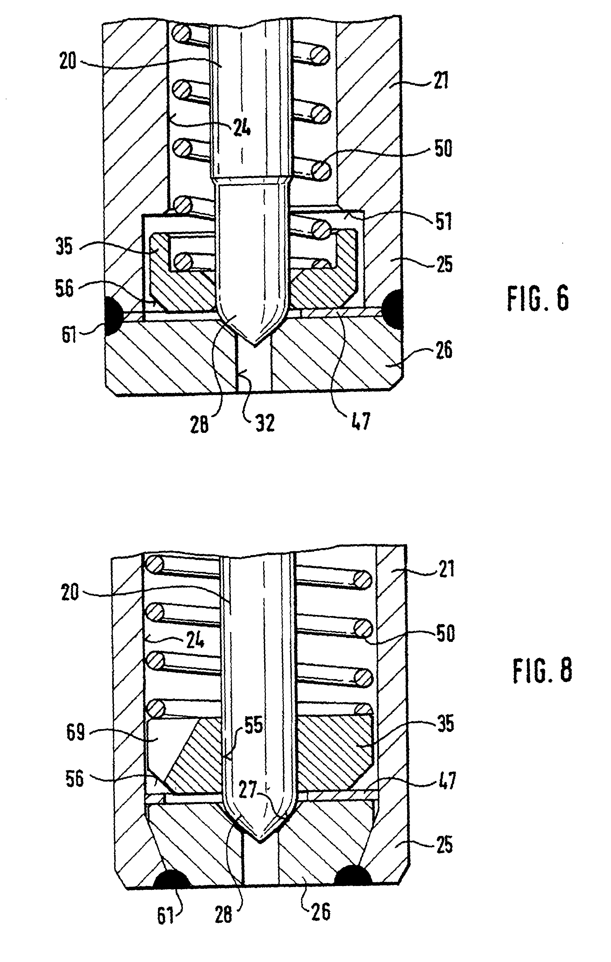

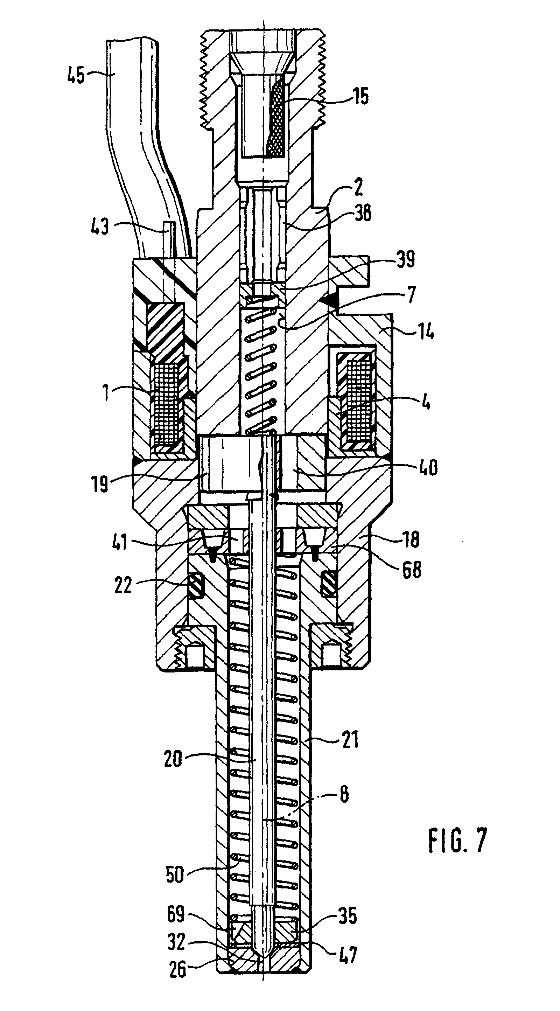

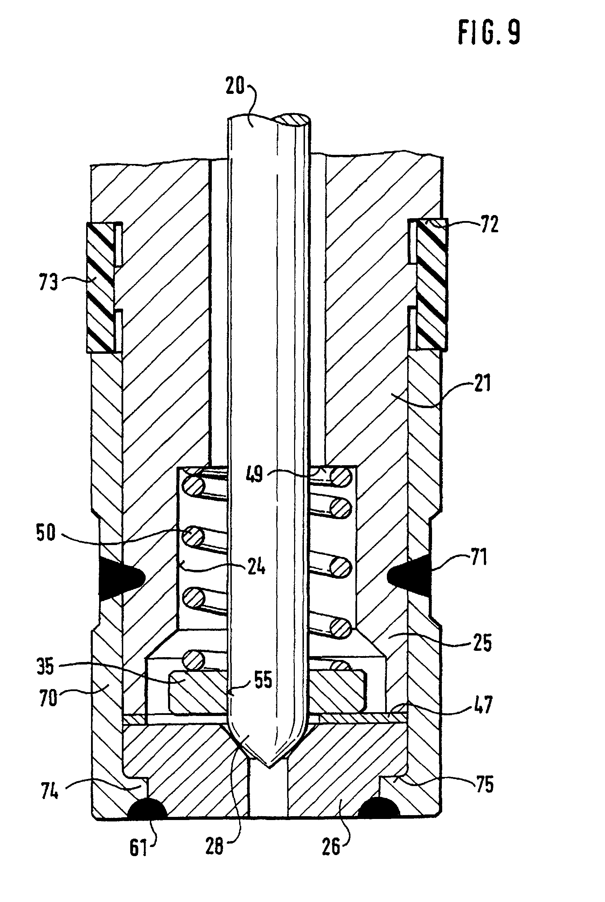

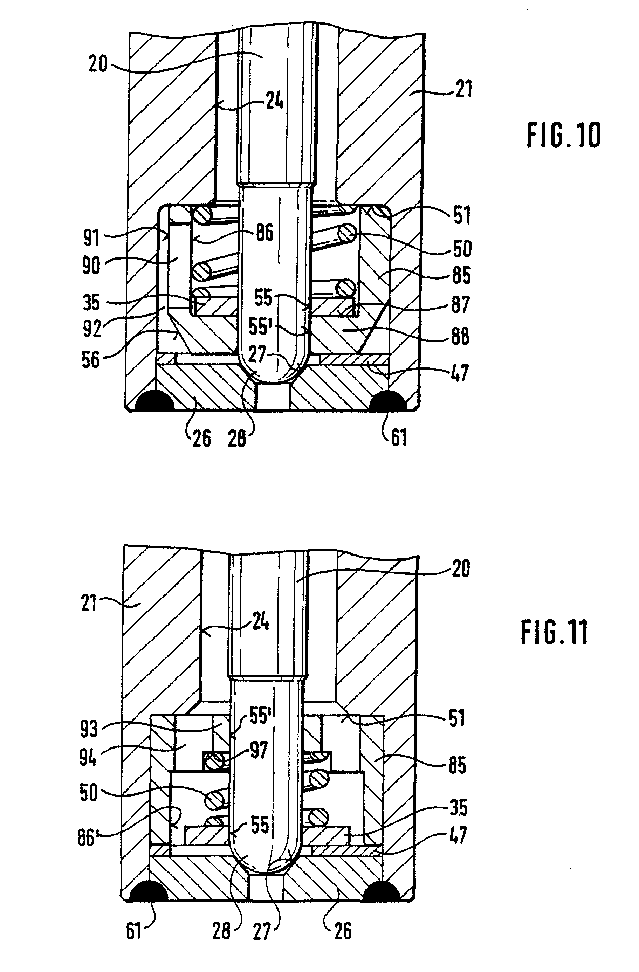

Ausführungsbeispiele der Erfindung sind in der Zeichnung vereinfacht dargestellt und in der nachfolgenden Beschreibung näher erläutert. Es zeigen Figur 1 ein erstes Ausführungsbeispiel eines Brennstoffeinspritzventils, Figur 2 einen ersten Führungs- und Sitzbereich als vergrößerten Ausschnitt aus Figur 1, Figur 3 ein erstes einlagiges Drallelement, Figur 4 ein zweites zweilagiges Drallelement, Figur 5 einen Schnitt durch das Drallelement entlang der Linie V-V in Figur 4, Figur 6 einen zweiten Führungs- und Sitzbereich, Figur 7 ein zweites Ausführungsbeispiel eines Brennstoffeinspritzventils, Figur 8 einen dritten Führungs- und Sitzbereich als vergrößerten Ausschnitt aus Figur 7, Figur 9 einen vierten Führungs- und Sitzbereich, Figur 10 einen fünften Führungs- und Sitzbereich und Figur 11 einen sechsten Führungs- und Sitzbereich.

### Beschreibung der Ausführungsbeispiele

Das in der Figur 1 beispielsweise als ein Ausführungsbeispiel dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 zumindest teilweise umgebenen, als Innenpol eines Magnetkreises dienenden, rohrförmigen, weitgehend hohlzylindrischen Kern 2. Das Brennstoffeinspritzventil eignet sich besonders als Hochdruckeinspritzventil zum direkten Einspritzen von Brennstoff in einen Brennraum einer Brennkraftmaschine. Ein beispielsweise gestufter Spulenkörper 3 aus Kunststoff nimmt eine Bewicklung der Magnetspule 1 auf und ermöglicht in Verbindung mit dem Kern 2 und einem ringförmigen, nichtmagnetischen, von der Magnetspule 1 teilweise umgebenen Zwischenteil 4 mit einem L-förmigen Querschnitt einen besonders kompakten und kurzen Aufbau des Einspritzventils im Bereich der Magnetspule 1.

In dem Kern 2 ist eine durchgängige Längsöffnung 7 vorgesehen, die sich entlang einer Ventillängsachse 8 erstreckt. Der Kern 2 des Magnetkreises dient auch als Brennstoffeinlaßstutzen, wobei die Längsöffnung 7 einen Brennstoffzufuhrkanal darstellt. Mit dem Kern 2 oberhalb der Magnetspule 1 fest verbunden ist ein äußeres metallenes (z. B. ferritisches) Gehäuseteil 14, das als Außenpol bzw. äußeres Leitelement den Magnetkreis schließt und die Magnetspule 1 zumindest in Umfangsrichtung vollständig umgibt. In der Längsöffnung 7 des Kerns 2 ist zulaufseitig ein Brennstoffilter 15 vorgesehen, der für die Herausfiltrierung solcher Brennstoffbestandteile sorgt, die aufgrund ihrer Größe im Einspritzventil Verstopfungen oder Beschädigungen verursachen könnten. Der Brennstoffilter 15 ist z. B. durch Einpressen im Kern 2 fixiert.

Der Kern 2 bildet mit dem Gehäuseteil 14 das zulaufseitige Ende des Brennstoffeinspritzventils, wobei sich das obere Gehäuseteil 14 beispielsweise in axialer Richtung stromabwärts gesehen gerade noch über die Magnetspule 1 hinaus erstreckt. An das obere Gehäuseteil 14 schließt sich dicht und fest ein unteres rohrförmiges Gehäuseteil 18 an, das z. B. ein axial bewegliches Ventilteil bestehend aus einem Anker 19 und einer stangenförmigen Ventilnadel 20 bzw. einen langgestreckten Ventilsitzträger 21 umschließt bzw. aufnimmt. Die beiden Gehäuseteile 14 und 18 sind z. B. mit einer umlaufenden Schweißnaht fest miteinander verbunden.

In dem in Figur 1 dargestellten Ausführungsbeispiel sind das untere Gehäuseteil 18 und der weitgehend rohrförmige Ventilsitzträger 21 durch Verschrauben fest miteinander verbunden; Schweißen, Löten oder Bördeln stellen aber ebenso mögliche Fügeverfahren dar. Die Abdichtung zwischen dem Gehäuseteil 18 und dem Ventilsitzträger 21 erfolgt z. B. mittels eines Dichtrings 22. Der Ventilsitzträger 21 besitzt über seine gesamte axiale Ausdehnung eine innere Durchgangsöffnung 24, die konzentrisch zu der Ventillängsachse 8 verläuft.

Mit seinem unteren Ende 25, das auch zugleich den stromabwärtigen Abschluß des gesamten Brennstoffeinspritzventils darstellt, umgibt der Ventilsitzträger 21 ein in der Durchgangsöffnung 24 eingepaßtes scheibenförmiges Ventilsitzelement 26 mit einer sich stromabwärts kegelstumpfförmig verjüngenden Ventilsitzfläche 27. In der Durchgangsöffnung 24 ist die z. B. stangenförmige, einen weitgehend kreisförmigen Querschnitt aufweisende Ventilnadel 20 angeordnet, die an ihrem stromabwärtigen Ende einen Ventilschließabschnitt 28 aufweist. Dieser beispielsweise kugelig oder teilweise kugelförmig bzw. wie in allen Figuren dargestellt sich keglig verjüngende Ventilschließabschnitt 28 wirkt in bekannter Weise mit der im Ventilsitzelement 26 vorgesehenen Ventilsitzfläche 27 zusammen. Stromabwärts der Ventilsitzfläche 27 ist im Ventilsitzelement 26 wenigstens eine Austrittsöffnung 32 für den Brennstoff eingebracht.

Die Betätigung des Einspritzventils erfolgt in bekannter Weise elektromagnetisch. Zur axialen Bewegung der Ventilnadel 20 und damit zum Öffnen entgegen der Federkraft einer in der Längsöffnung 7 des Kerns 2 angeordneten Rückstellfeder 33 bzw. Schließen des Einspritzventils dient der elektromagnetische Kreis mit der Magnetspule 1, dem Kern 2, den Gehäuseteilen 14 und 18 und dem Anker 19. Der Anker 19 ist mit dem dem Ventilschließabschnitt 28 abgewandten Ende der Ventilnadel 20 z. B. durch eine Schweißnaht verbunden und auf den Kern 2 ausgerichtet. Zur Führung der Ventilnadel 20 während ihrer Axialbewegung mit dem Anker 19 entlang der Ventillängsachse 8 dient einerseits eine im Ventilsitzträger 21 am dem Anker 19 zugewandten Ende vorgesehene Führungsöffnung 34 und andererseits ein stromaufwärts des Ventilsitzelements 26 angeordnetes scheibenförmiges Führungselement 35 mit einer maßgenauen Führungsöffnung 55, in der die Ventilnadel 20 ein nur sehr geringes Spiel von ca. 1 bis 20 µm aufweist. Der Anker 19 wird während seiner Axialbewegung von dem Zwischenteil 4 umgeben.

Eine in der Längsöffnung 7 des Kerns 2 eingeschobene, eingepreßte oder eingeschraubte Einstellhülse 38 dient zur Einstellung der Federvorspannung der über ein Zentrierstück 39 mit ihrer stromaufwärtigen Seite an der Einstellhülse 38 anliegenden Rückstellfeder 33, die sich mit ihrer gegenüberliegenden Seite am Anker 19 abstützt. Im Anker 19 sind ein oder mehrere bohrungsähnliche Strömungskanäle 40 vorgesehen, durch die der Brennstoff von der Längsöffnung 7 im Kern 2 aus über stromabwärts der Strömungskanäle 40 ausgebildete Verbindungskanäle 41 nahe der Führungsöffnung 34 im Ventilsitzträger 21 bis in die Durchgangsöffnung 24 gelangen kann.

Der Hub der Ventilnadel 20 wird durch die Einbaulage des Ventilsitzelements 26 vorgegeben. Eine Endstellung der Ventilnadel 20 ist bei nicht erregter Magnetspule 1 durch die Anlage des Ventilschließabschnitts 28 an der Ventilsitzfläche 27 des Ventilsitzelements 26 festgelegt, während sich die andere Endstellung der Ventilnadel 20 bei erregter Magnetspule 1 durch die Anlage des Ankers 19 an der stromabwärtigen Stirnseite des Kerns 2 ergibt. Die Oberflächen der Bauteile im letztgenannten Anschlagbereich sind beispielsweise verchromt.

Die elektrische Kontaktierung der Magnetspule 1 und damit deren Erregung erfolgt über Kontaktelemente 43, die noch außerhalb des Spulenkörpers 3 mit einer Kunststoffumspritzung 44 versehen sind. Die Kunststoffumspritzung 44 kann sich auch über weitere Bauteile (z. B. Gehäuseteile 14 und 18) des Brennstoffeinspritzventils erstrecken. Aus der Kunststoffumspritzung 44 heraus verläuft ein elektrisches Anschlußkabel 45, über das die Bestromung der Magnetspule 1 erfolgt. Die Kunststoffumspritzung 44 ragt durch das in diesem Bereich unterbrochene obere Gehäuseteil 14.

In Figur 2 ist der Führungs- und Sitzbereich als Ausschnitt aus Figur 1 nochmals in geändertem Maßstab dargestellt, um diesen erfindungsgemäß ausgebildeten Ventilbereich besser zu verdeutlichen. Der im abspritzseitigen Ende 25 des Ventilsitzträgers 21 in dessen Durchgangsöffnung 24 vorgesehene Führungs- und Sitzbereich wird bei dem in Figur 2 dargestellten Ausführungsbeispiel durch drei axial aufeinanderfolgende, scheibenförmige, funktionsgetrennte Elemente gebildet. In stromabwärtiger Richtung folgen nacheinander das Führungselement 35, ein sehr flaches Drallelement 47 und das Ventilsitzelement 26.

Stromabwärts der Führungsöffnung 34 ist die Durchgangsöffnung 24 des Ventilsitzträgers 21 beispielsweise zweimal gestuft ausgeführt, wobei sich in stromabwärtiger Richtung gesehen mit jeder Stufe der Durchmesser der Durchgangsöffnung 24 vergrößert. Ein erster Absatz 49 (Figur 1) dient als Anlagefläche für eine z.B. schraubenförmige Druckfeder 50. Mit der zweiten Stufe 51 wird ein vergrößerter Einbauraum für die drei Elemente 35, 47 und 26 geschaffen. Die die Ventilnadel 20 umhüllende Druckfeder 50 verspannt die drei Elemente 35, 47 und 26 weich im Ventilsitzträger 21, da sie mit ihrer dem Absatz 49 gegenüberliegenden Seite gegen das Führungselement 35 drückt. Erfindungsgemäß liegt also ein federverspanntes Führungselement 35 vor, das durch die Einbaulage der Druckfeder 50 und deren Wirkrichtung in Richtung zum Ventilsitzelement 26 gedrückt wird und das mit seinem Außendurchmesser ein großes Spiel zum Ventilsitzträger 21 aufweist. Um eine sichere Auflagefläche am Führungselement 35 für die Druckfeder 50 zu haben, ist die dem Drallelement 47 abgewandte Stirnseite mit einer Ausnehmung 52 versehen, an deren Grund 53 die Druckfeder 50 anliegt.

Das Führungselement 35 weist eine maßgenaue innere Führungsöffnung 55 auf, durch die sich die Ventilnadel 20 während ihrer Axialbewegung hindurch bewegt. Der Außendurchmesser des Führungselements 35 ist kleiner gewählt als der Durchmesser der Durchgangsöffnung 24 stromabwärts der Stufe 51. Damit wird eine Brennstoffströmung am äußeren Umfang des Führungselements 35 entlang in Richtung zur Ventilsitzfläche 27 garantiert. Der Brennstoff strömt stromabwärts des Führungselements 35 unmittelbar in das Drallelement 47, das Figur 3 in einer Draufsicht zeigt, ein.

Zum verbesserten Einströmen nahe des äußeren Randes des Drallelements 47 ist das Führungselement 35 an seiner unteren Stirnseite z.B. mit einer umlaufenden Fase 56 versehen.

Die drei Elemente 35, 47 und 26 liegen unmittelbar mit ihren jeweiligen Stirnflächen aneinander. Bevor eine feste Verbindung des Ventilsitzelements 26 am Ventilsitzträger 21 vorgenommen wird, erfolgt eine Ausrichtung des Ventilsitzelements 26. Das Ventilsitzelement 26 wird durch ein Werkzeug z.B. in Form eines Stempels 58, der in Figur 2 nur schematisch angedeutet ist und der an der äußeren stromabwärtigen Stirnseite des Ventilsitzelements 26 sowie des Ventilsitzträgers 21 anliegt, gegenüber der Längsachse des Ventilsitzträgers 21 ausgerichtet. Dieser Schweißausrichtstempel 58 hat z.B. über den Umfang verteilt einige Aussparungen 59, durch die das Ventilsitzelement 26 mit dem Ventilsitzträger 21 punktweise laserverschweißt wird. Nach dem Entfernen des Stempels 58 kann das Ventilsitzelement 26 vollständig umlaufend mit einer dichten Schweißnaht 61 eingeschweißt werden. Nachfolgend wird beispielsweise wiederum das Führungselement 35 gegenüber dem Ventilsitzelement 26 mittels der an der Ventilsitzfläche 27 aufsitzenden Ventilnadel 20 ausgerichtet.

In Figur 3 ist ein zwischen Führungselement 35 und Ventilsitzelement 26 eingebettetes Drallelement 47 als Einzelbauteil in einer Draufsicht dargestellt, das mit möglichst geringem Spiel am Umfang in der Durchgangsöffnung 24 geführt ist. Das Drallelement 47 kann kostengünstig beispielsweise mittels Stanzen, Drahterodieren, Laserschneiden, Ätzen oder anderen bekannten Verfahren aus einem Blech hergestellt werden. In dem Drallelement 47 ist ein innerer Öffnungsbereich 60 ausgeformt, der über die gesamte axiale Dicke des Drallelements 47 verläuft. Der Öffnungsbereich 60 wird von einer inneren Drallkammer 62, durch die sich der Ventilschließabschnitt 28 der Ventilnadel 20 hindurch erstreckt, und von einer Vielzahl von in die Drallkammer 62 mündenden Drallkanälen 63 gebildet. Die Drallkanäle 63 münden tangential in die Drallkammer 62 und stehen mit ihren der Drallkammer 62 abgewandten Enden 65 nicht mit dem äußeren Umfang des Drallelements 47 in Verbindung. Vielmehr verbleibt zwischen den Enden 65 der Drallkanäle 63 und dem äußeren Umfang des Drallelements 47 ein umlaufender Randbereich 66.

Bei eingebauter Ventilnadel 20 wird die Drallkammer 62 nach innen von der Ventilnadel 20 (Ventilschließabschnitt 28) und nach außen durch die Wandung des Öffnungsbereichs 60 des Drallelements 47 begrenzt. Durch die tangentiale Einmündung der Drallkanäle 63 in die Drallkammer 62 bekommt der Brennstoff einen Drehimpuls aufgeprägt, der in der weiteren Strömung bis in die Austrittsöffnung 32 erhalten bleibt. Durch die Fliehkraft wird der Brennstoff hohlkegelförmig abgespritzt. Eine gewünschte Verlängerung der Drallkanäle 63 wird z.B. durch ein Krümmen oder Abknicken erreicht. Die hakenförmig abgeknickten Enden 65 der Drallkanäle 63 dienen als Sammeltaschen, die großflächig ein Reservoir zum turbulenzarmen Einströmen des Brennstoffs bilden. Nach der Strömungsumlenkung tritt der Brennstoff langsam und turbulenzarm in die eigentlichen tangentialen Drallkanäle 63 ein, wodurch ein weitgehend störungsfreier Drall erzeugbar ist.

Anstelle des aus einem Blech hergestellten Drallelements 47 kann das Drallelement 47 auch durch galvanische Abscheidung hergestellt werden, wobei das Drallelement 47 dann, wie es die Figuren 4 und 5 zeigen, mehrlagig ausgebildet sein kann. Figur 4 zeigt dabei ein zweilagiges Drallelement 47 in einer Draufsicht, während Figur 5 eine Schnittdarstellung eines Schnittes entlang der Linie V-V in Figur 4 ist. In dem Drallelement 47 ist eine innere Durchgangsöffnung 81 eingebracht, in der sich die Ventilnadel 20 entlang bewegt. Die erste, untere Lage des Drallelements 47 stellt eine kreisringförmige Grundplatte 82 dar, von der aus sich mehrere Erhebungen 83 in der zweiten, oberen Lage erstrecken. Die Erhebungen 83 sind derart ausgebildet, daß sie zwischen sich mehrere Drallkanäle 63 bilden und damit auch begrenzen, wobei die untere Begrenzung der Drallkanäle 63 durch die obere Stirnseite der Grundplatte 82 erfolgt.

Die Drallkanäle 63 münden tangential in eine Drallkammer 62, die die Durchgangsöffnung 81 in der oberen Lage ringförmig umgibt. Auf der der Drallkammer 62 abgewandten Seite verlaufen die Drallkanäle 63 bis unmittelbar zum äußeren Umfang des Drallelements 47. Vom äußeren Umfang des Drallelements 47 ausgehend verjüngen sich beispielsweise die Drallkanäle 63 in ihrer Breite bis hin zur Drallkammer 62. Die äußeren Drallkanaleinlaufbereiche sorgen bereits für eine turbulenzarme Einströmung des Brennstoffs. So wird die Drallströmung besonders gleichmäßig und genau vorherbestimmbar.

In den weiteren Ausführungsbeispielen der nachfolgenden Figuren sind die gegenüber dem in den Figuren 1 und 2 dargestellten Ausführungsbeispiel gleichbleibenden bzw. gleichwirkenden Teile durch die gleichen Bezugszeichen gekennzeichnet. Der in Figur 6 dargestellte Führungs- und Sitzbereich unterscheidet sich von dem in Figur 2 gezeigten hauptsächlich dadurch, daß eine andere Befestigungsmöglichkeit des Ventilsitzelements 26 am Ventilsitzträger 21 vorgesehen ist. Da das Ende 25 des Ventilsitzträgers 21 stromabwärts der Stufe 51 verkürzt ausgeführt ist, findet von den drei Elementen 35, 47 und 26 nur das Führungselement 35 Aufnahme in der Durchgangsöffnung 24 des Ventilsitzträgers 21. Dagegen liegt das Drallelement 47 stirnseitig am unteren Ende 25 des Ventilsitzträgers 21 an. Das mit einem größeren Außendurchmesser ausgebildete Drallelement 47 kann in vorteilhafter Weise längere Drallkanäle 63 besitzen, so daß eine noch turbulenzärmere Strömung erzielbar ist. Entsprechend dem äußeren Durchmesser des Drallelements 47 weist auch das Ventilsitzelement 26 diesen vergrößerten Außendurchmesser auf. Die Befestigung des Ventilsitzelements 26 am Ventilsitzträger 21 erfolgt z.B. mittels einer umlaufenden Schweißnaht 61 am äußeren Umfang des Ventilsitzelements 26, wobei die Schweißnaht 61 im Bereich des Drallelements 47 vorgesehen sein kann.

Bei dem in Figur 7 dargestellten Ausführungsbeispiel eines Brennstoffeinspritzventils ist der Ventilsitzträger 21 deutlich dünnwandiger ausgeführt als bei dem in Figur 1 gezeigten Ausführungsbeispiel. Während sich die Druckfeder 50 mit ihrem unteren Ende an der oberen Stirnseite des damit federverspannten Führungselements 35 ohne Ausnehmung 52 abstützt, liegt die Druckfeder 50 mit ihrem gegenüberliegenden Ende an einer Stützscheibe 68 an. Die Stützscheibe 68 ist durch eine Schweißnaht fest mit dem oberen Ende des Ventilsitzträgers 21 verbunden. Anstelle der Verbindungskanäle 41 im Ventilsitzträger 21 besitzt bei dieser Ausführungsform die Stützscheibe 68 mehrere axial verlaufende und durchgehende Verbindungskanäle 41. Zur verbesserten Strömung des Brennstoffs ist am äußeren Umfang des Führungselements 35 wenigstens ein nutähnlicher Strömungskanal 69 ausgebildet, der besonders in Figur 8 deutlich wird.

In Figur 8 ist der Führungs- und Sitzbereich als Ausschnitt aus Figur 7 nochmals in geändertem Maßstab dargestellt, um diesen erfindungsgemäß ausgebildeten Ventilbereich besser zu verdeutlichen. Der im abspritzseitigen Ende 25 des Ventilsitzträgers 21 in dessen Durchgangsöffnung 24 vorgesehene Führungs- und Sitzbereich wird wiederum durch die drei axial aufeinanderfolgenden, scheibenförmigen Elemente 35, 47 und 26 gebildet. Am unteren Ende 25 des Ventilsitzträgers 21 ist die innere Durchgangsöffnung 24 in Strömungsrichtung konisch verjüngt ausgeführt. Entsprechend weist auch das Ventilsitzelement 26 zum genauen Einpassen in den Ventilsitzträger 21 eine sich konisch verjüngende Außenkontur auf. Bei diesem Ausführungsbeispiel werden die drei Elemente 35, 47 und 26 durch die Durchgangsöffnung 24 von oben, also von der dem Anker 19 zugewandten Seite her eingeführt, wobei mit dem Ventilsitzelement 26 begonnen wird. In diesem Fall ist die Schweißnaht 61 am unteren Ende 25 des Ventilsitzträgers 21 deutlich geringer belastet.

In Figur 9 ist ein weiterer Führungs- und Sitzbereich dargestellt, bei dem das Ende 25 des Ventilsitzträgers 21 umfänglich von einem zusätzlichen rohrförmigen Befestigungsteil 70 umgeben ist. Ähnlich wie beim in Figur 6 gezeigten Ausführungsbeispiel sind das Drallelement 47 und das Ventilsitzelement 26 mit einem größeren Außendurchmesser versehen als dem Durchmesser der Durchgangsöffnung 24, weshalb das Drallelement 47 am Ende 25 des Ventilsitzträgers 21 stirnseitig anliegt. Das Führungselement 35 ist als flache Scheibe ausgeführt und innerhalb der Durchgangsöffnung 24 angeordnet, wobei der Außendurchmesser deutlich geringer ist als der Durchmesser der Durchgangsöffnung 24, so daß Brennstoff am äußeren Umfang des Führungselements 35 axial entlang strömen kann.

Die feste Verbindung von Ventilsitzelement 26 und Ventilsitzträger 21 wird durch das zusätzliche Befestigungsteil 70 erzielt. Das dünnwandige, rohrförmige Befestigungsteil 70 umgibt nämlich sowohl das Ventilsitzelement 26 und das Drallelement 47 als auch das Ende 25 des Ventilsitzträgers 21. Mit der Schweißnaht 61 sind das Ventilsitzelement 26 und das Befestigungsteil 70 an ihren unteren bündig abschließenden Stirnflächen miteinander verbunden. In besonders vorteilhafter Weise besitzt das Befestigungsteil 70 an seiner unteren Stirnfläche eine nach innen ragende, umlaufende Schulter 74, an der das Ventilsitzelement 26 mit einer Stufe 75 aufsitzen kann. Aufgrund dieser Ausbildung des Befestigungsteils 70 kann die Schweißnaht 61 mit weniger Materialauftrag und damit verbundenen geringerem Schweißverzug angebracht werden. Die Schweißnaht 61 ist bei einer solchen Ausführung deutlich geringer belastet als bei der Ausführung gemäß Figur 2. Die Schweißung kann also mit geringerer thermischer Energie erfolgen, wodurch die Formgenauigkeit des Ventilsitzelements 26 auf jeden Fall garantiert ist.

Die Verbindung von Ventilsitzträger 21 und Befestigungsteil 70 übernimmt eine zweite, beispielsweise etwas stärker als die Schweißnaht 61 ausgebildete Schweißnaht 71, die z.B. stromaufwärts des Führungselements 35 vom äußeren Umfang des Befestigungsteils 70 her angebracht wird. Durch das zusätzliche Befestigungsteil 70 können das Drallelement 47 und das Führungselement 35 sehr genau zur Längsachse des Ventilsitzträgers 21 ausgerichtet werden, womit ein Verkanten oder Verklemmen des Führungselements 35 auf der Ventilnadel 20 vermieden wird. In der Durchgangsöffnung 24 des Ventilsitzträgers 21 ist wiederum die Druckfeder 50 eingebaut, die mit ihrem einen Ende an dem federverspannten Führungselement 35 anliegt und die sich mit ihrem dem Führungselement 35 abgewandten Ende an dem Absatz 49 im Ventilsitzträger 21 abstützt. Zwischen einem äußeren Absatz 72 am Ventilsitzträger 21 und dem der Schweißnaht 61 abgewandten oberen Ende des Befestigungsteils 70 ist beispielsweise ein Dichtelement 73 eingesetzt.

Wie bereits erwähnt, kann der Ventilschließabschnitt 28 anstelle des kegelstumpfförmigen Verlaufs auch anderweitig, z.B. kugelig ausgebildet sein. Bei einem solchen Kugelabschnitt am stromabwärtigen Ende der Ventilnadel 20 liegt der Kugelmittelpunkt in vorteilhafter Weise in axialer Höhe des Führungselements 35. So wird wirkungsvoll verhindert, daß sich die Ventilnadel 20 im Führungselement 35 verklemmt.

Für alle Ausführungsbeispiele gilt, daß das Spiel zwischen der Ventilnadel 20 und dem Führungselement 35 in der Führungsöffnung 55 sehr gering ist, damit es in diesem Bereich aufgrund der Druckdifferenz zwischen den beiden Stirnseiten des Führungselements 35 nicht zu einem Leckstrom des Brennstoffs kommt. Das Führungselement 35 weist in der Durchgangsöffnung 24 ein deutlich größeres Spiel auf als die Ventilnadel 20 in der Führungsöffnung 55.

In den Figuren 10 und 11 sind als zwei weitere Beispiele Führungs- und Sitzbereiche dargestellt, die neben den bereits ausführlich beschriebenen Elementen 35, 47 und 26 noch jeweils ein weiteres Unterstützungselement 85 aufweisen. Während das Führungselement 35 jeweils als flache Scheibe ausgeführt ist, handelt es sich bei dem Unterstützungselement 85 um einen zylindrischen Körper, der den gleichen Außendurchmesser hat wie der Durchmesser der Durchgangsöffnung 24 des Ventilsitzträgers 21 stromabwärts der Stufe 51. Das Unterstützungselement 85 ist dabei im Ventilsitzträger 21 fest axial gehäuseverspannt.

Bei dem in Figur 10 gezeigten Ausführungsbeispiel weist das Unterstützungselement 85 eine dem Ventilsitzelement 26 abgewandte Ausnehmung 86 auf, an deren Grund 87 das Führungselement 35 aufliegt. Das Unterstützungselement 85 steht mit einem Bodenbereich 88 auf dem Drallelement 47 auf.

Die Ausnehmung 86 wird in stromabwärtiger Richtung fortgesetzt mit einer im Bodenbereich 88 befindlichen Führungsöffnung 55' geringeren Durchmessers. Die Druckfeder 50 ist wie das Führungselement 35 in der Ausnehmung 86 des Unterstützungselements 85 angeordnet, wobei sich die Druckfeder 50 einerseits an der Stufe 51 und andererseits an dem damit federverspannten Führungselement 35 abstützt. Das Führungselement 35 ist auf dem Bodenbereich 88 des Unterstützungselements 85 mit der Druckfeder 50 radial beweglich verspannt und kann sich nach der Ventilnadel 20 ausrichten.

In der Wandung des Unterstützungselements 85 ist wenigstens eine Radialöffnung 90 vorgesehen, durch die der Brennstoff aus der Ausnehmung 86 in einen zwischen der inneren Wandung des Ventilsitzträgers 21 und der äußeren Wandung des Unterstützungselements 85 aufgrund einer in Form einer Abflachung oder Nut vorgesehenen Durchmesserverkleinerung 91 gebildeten Strömungskanal 92 treten kann. Von diesem Strömungskanal 92 aus gelangt der Brennstoff an der Fase 56 vorbei in die Drallkanäle 63 des Drallelements 47 und weiter bis zur Ventilsitzfläche 27.

Bei dem in Figur 11 dargestellten Ausführungsbeispiel weist das Unterstützungselement 85 keinen Bodenbereich, sondern einen Deckelbereich 93 auf, der eine innere zentrale Führungsöffnung 55' besitzt, durch die sich die Ventilnadel 20 hindurch erstreckt. In dem an der Stufe 51 anliegenden Deckelbereich 93 sind des weiteren beispielsweise zwei oder vier Axialöffnungen 94 eingebracht, die wie die Führungsöffnung 55' in eine zum Drallelement 47 hin offene Ausnehmung 86' münden. Der Brennstoff tritt über die Axialöffnungen 94 in die Ausnehmung 86' ein, von wo er an dem Führungselement 35 vorbei in die Drallkanäle 63 des Drallelements 47 und weiter bis zur Ventilsitzfläche 27 strömt.

Die Druckfeder 50 ist wie das Führungselement 35 in der Ausnehmung 86' des Unterstützungselements 85 angeordnet, wobei sich die Druckfeder 50 einerseits an einem Absatz 97 des Deckelbereichs 93 des Unterstützungselements 85 zwischen der inneren Führungsöffnung 55' und den Axialöffnungen 94 und andererseits an dem damit federverspannten Führungselement 35 abstützt. Das Führungselement 35 ist auf dem Drallelement 47 mit der Druckfeder 50 radial beweglich verspannt und kann sich nach der Ventilnadel 20 ausrichten.

Beiden letztgenannten Ausführungsbeispielen ist gemeinsam, daß ein radial bewegliches, federverspanntes, beispielsweise scheibenförmiges Führungselement 35 in einem Unterstützungselement 85, das ebenfalls einen Führungsbereich aufweist, untergebracht ist. Dabei hat die Führungsöffnung 55 des federverspannten Führungselements 35 eine solche Größe, daß die Ventilnadel 20 sie mit einem geringeren Spiel durchragt als die Führungsöffnung 55' des gehäuseverspannten Unterstützungselements 85. Das Spiel der Ventilnadel 20 gegenüber der Führungsöffnung 55 beträgt ca. 1 bis 15 µm, während das Spiel gegenüber der Führungsöffnung 55' in der Größenordnung von ca. 20 bis 100 µm liegt. Diese Größenangaben dienen nur dem besseren Verständnis und schränken die Erfindung in keiner Weise ein.

Das Unterstützungselement 85 kann aufgrund des relativ großen Spiels zur Ventilnadel 20 kostengünstig hergestellt und montiert werden. Das Unterstützungselement 85 dient zur Vorzentrierung der Ventilnadel 20 bei der Montage und kann auch als "Notführung" verwendet werden. Wenn es durch Schmutz oder andere Ablagerungen dazu kommen sollte, daß das Führungselement 35 an der Ventilnadel 20 haften bleibt und sich axial mitbewegt, dann kann immer noch die Führungsöffnung 55' des Unterstützungselements 85 die Führung der Ventilnadel 20 übernehmen.

Der Hauptunterschied beider letztgenannten Ausführungsformen besteht in der geometrischen Anordnung der zweiten Führungsöffnung 55'. Einerseits kann die Führungsöffnung 55' mit größerem Spiel zwischen der Führungsöffnung 55 mit geringem Spiel und der Ventilsitzfläche 27 angeordnet sein (Figur 10); andererseits kann die Führungsöffnung 55' auch bereits stromaufwärts der Führungsöffnung 55 vorgesehen sein (Figur 11).

Es soll noch ausdrücklich darauf hingewiesen werden, daß das Verwenden eines Drallelements 47 stromabwärts des Führungselements 35 keine ausschließliche Bedingung ist. Vielmehr ist es auch denkbar, an der unteren Stirnseite des Führungselements 35 bereits Drallnuten vorzusehen, die dann durch die Auflage auf dem Ventilsitzelement 26 Drallkanäle bilden.

## Patentansprüche

1. Brennstoffeinspritzventil für Brennstoffeinspritzanlagen von Brennkraftmaschinen, insbesondere zum direkten Einspritzen von Brennstoff in einen Brennraum einer Brennkraftmaschine, mit einem elektromagnetischen Kreis, mit einer axial entlang einer Ventillängsachse (8) bewegbaren Ventilnadel (20), die einen Ventilschließabschnitt (28) aufweist, der zum Öffnen und Schließen des Ventils mit einem festen Ventilsitz (27) zusammenwirkt, der an einem Ventilsitzelement (26) ausgebildet ist, mit einem stromaufwärts des Ventilsitzelements (26) angeordneten separaten Führungselement (35), das eine innere Führungsöffnung (55) aufweist, in der die Ventilnadel (20) axial bewegbar ist, mit einer an dem Führungselement (35) angreifenden Druckfeder (50), wobei die Druckfeder (50) gegenüber dem Führungselement (35) derart eingebaut ist, daß die Federverspannung des Führungselements (35) durch die Wirkrichtung der Druckfeder (50) zu dem separaten Ventilsitzelement (26) hin erfolgt, und mit einem Drallelement (47), das zwischen dem Führungselement (35) und dem Ventilsitzelement (26) angeordnet ist, so daß das Führungselement (35) mittels der Druckfeder (50) unmittelbar gegen das Drallelement (47) und letztlich gegen das Ventilsitzelement (26) gedrückt wird, **dadurch gekennzeichnet, daß** das Drallelement (47) zum Führungselement (26) hin offene Drallkanäle (63) hat, die im federverspannten Zustand des Führungselements (35) durch das Führungselement (35) abgedeckt sind.

2. Brennstoffeinspritzventil nach Anspruch 1, **dadurch gekennzeichnet, daß** das Führungselement (35) eine dem Ventilsitzelement (26) abgewandte zentrale Ausnehmung (52) aufweist, an deren Grund (53) sich die Druckfeder (50) abstützt.

3. Brennstoffeinspritzventil nach Anspruch 1, **dadurch gekennzeichnet, daß** das Führungselement (35) eine ebene, dem Ventilsitzelement (26) abgewandt liegende Stirnfläche hat, an der sich die Druckfeder (50) abstützt.

4. Brennstoffeinspritzventil nach einem der vorhergehenden Ansprüche, **dadurch gekennzeichnet, daß** am äußeren Umfang des Führungselements (35) wenigstens ein nutähnlicher Strömungskanal (69) ausgeformt ist.

5. Brennstoffeinspritzventil nach einem der vorhergehenden Ansprüche, **dadurch gekennzeichnet, daß** am äußeren Umfang des Führungselements (35) den Mitteln zur Drallerzeugung (47) zugewandt eine umlaufende Fase (56) ausgeformt ist.

6. Brennstoffeinspritzventil nach einem der vorhergehenden Ansprüche, **dadurch gekennzeichnet, daß** das Führungselement (35) in einer Durchgangsöffnung (24) eines Ventilsitzträgers (21) angeordnet ist, wobei das Spiel des Führungselements (35) im Ventilsitzträger (21) größer ist als das Spiel der Ventilnadel (20) in der Führungsöffnung (55).

7. Brennstoffeinspritzventil nach Anspruch 6, **dadurch gekennzeichnet, daß** die Durchgangsöffnung (24) des Ventilsitzträgers (21) einen Absatz (49) aufweist, an dem die Druckfeder (50) mit ihrem einen Ende anliegt, während sie sich mit ihrem anderen Ende am Führungselement (35) abstützt.

8. Brennstoffeinspritzventil nach Anspruch 6, **dadurch gekennzeichnet, daß** am Ventilsitzträger (21) eine Stützscheibe (68) befestigt ist, an der die Druckfeder (50) mit ihrem einen Ende anliegt, während sie sich mit ihrem anderen Ende am Führungselement (35) abstützt.

9. Brennstoffeinspritzventil nach einem der Ansprüche 1 bis 3, **dadurch gekennzeichnet, daß** das Führungselement (35) in einer Ausnehmung (86, 86') eines Unterstützungselements (85) eingebracht ist, das wiederum in einer Durchgangsöffnung (24) eines Ventilsitzträgers (21) angeordnet ist, wobei das Unterstützungselement (85) eine zweite innere Führungsöffnung (55') aufweist, in der die Ventilnadel (20) axial bewegbar ist.

10. Brennstoffeinspritzventil nach Anspruch 9, **dadurch gekennzeichnet, daß** die erste Führungsöffnung (55) des Führungselements (35) eine solche Größe hat, daß die Ventilnadel (20) sie mit einem geringeren Spiel durchragt als die zweite Führungsöffnung (55') des Unterstützungselements (85).

11. Brennstoffeinspritzventil nach Anspruch 10, **dadurch gekennzeichnet, daß** das Spiel der Ventilnadel (20) gegenüber der ersten Führungsöffnung (55) 1 bis 20 µm beträgt, während das Spiel gegenüber der zweiten Führungsöffnung (55') in der Größenordnung von 20 bis 100 µm liegt.

12. Brennstoffeinspritzventil nach Anspruch 1, **dadurch gekennzeichnet, daß** das Drallelement (47) scheibenförmig ausgeführt ist.

13. Brennstoffeinspritzventil nach Anspruch 12, **dadurch gekennzeichnet, daß** das Drallelement (47) mehrere Drallkanäle (63) aufweist, die tangential in eine innere Drallkammer (62) münden.

14. Brennstoffeinspritzventil nach Anspruch 13, **dadurch gekennzeichnet, daß** das Drallelement (47) einlagig aus einem Blech herstellbar ist.

15. Brennstoffeinspritzventil nach Anspruch 13, **dadurch gekennzeichnet, daß** das Drallelement (47) mehrlagig ausgeführt und durch galvanische Abscheidung herstellbar ist.

## Claims

1. Fuel injection valve for fuel injection systems of internal combustion engines, in particular for directly injecting fuel into a combustion chamber of an internal combustion engine, having an electromagnetic circuit, having a valve needle (20) which can move axially along a valve longitudinal axis (8) and has a valve closing section (28) which, in order to open and to close the valve, interacts with a fixed valve seat (27) which is formed on a valve seat element (26), having a separate guide element (35) which is arranged upstream of the valve seat element (26) and has an internal guide opening (55) in which the valve needle (20) can move axially, having a compression spring (50) which acts on the guide element (35), the compression spring (50) being installed, with respect to the guide element (35), in such a way that stressing of the guide element (35) by the spring is carried out by the direction of action of the compression spring (50) towards the separate valve seat element (26), and having a whirl element (47) which is arranged between the guide element (35) and the valve seat element (26) so that the guide element (35) is pressed, by means of the compression spring (50), directly against the whirl element (47) and ultimately against the valve seat element (26), **characterized in that** the whirl element (47) has whirl ducts (63) which are open towards the guide element (26) and are covered by the guide element (35) in the spring-stressed state of the guide element (35).

2. Fuel injection valve according to Claim 1, **characterized in that** the guide element (35) has a central cut-out (52) which faces away from the valve seat element (26) and on whose base (53) the compression spring (50) is supported.

3. Fuel injection valve according to Claim 1, **characterized in that** the guide element (35) has a planar end face which lies facing away from the valve seat element (26) and on which the compression spring (50) is supported.

4. Fuel injection valve according to one of the preceding claims, **characterized in that** at least one groove-like flow duct (69) is formed on the outer circumference of the guide element (35).

5. Fuel injection valve according to one of the preceding claims, **characterized in that** a circumferential chamfer (56) is formed on the outer circumference of the guide element (35), facing the means for generating a whirl (47).

6. Fuel injection valve according to one of the preceding claims, **characterized in that** the guide element (35) is arranged in a through-opening (24) of a valve seat carrier (21), the play of the guide element (35) in the valve seat carrier (21) being greater than the play of the valve needle (20) in the guide opening (55).

7. Fuel injection valve according to Claim 6, **characterized in that** the through-opening (24) of the valve seat carrier (21) has a shoulder (49) on which the compression spring (50) bears with its one end, while it is supported with its other end on the guide element (35).

8. Fuel injection valve according to Claim 6, **characterized in that** a supporting ring (68) is attached to the valve seat carrier (21), the compression spring (50) resting with its one end on said supporting ring (68) while it is supported with its other end on the guide element (35).

9. Fuel injection valve according to one of Claims 1 to 3, **characterized in that** the guide element (35) is inserted into a cut-out (86, 86') of a supporting element (85) which is in turn arranged in a through-opening (24) of a valve seat carrier (21), the supporting element (85) having a second internal guide opening (55') in which the valve needle (20) can be moved axially.

10. Fuel injection valve according to Claim 9, **characterized in that** the first guide opening (55) in the guide element (35) is of such a size that the valve needle (20) projects through it with less play than the second guide opening (55') of the supporting element (85).

11. Fuel injection valve according to Claim 10, **characterized in that** the play of the valve needle (20) with respect to the first guide opening (55) is 1 to 20 µm, while the play with respect to the second guide opening (55') is in the order of magnitude of 20 to 100 µm.

12. Fuel injection valve according to Claim 1, **characterized in that** the whirl element (47) is of disc-shaped design.

13. Fuel injection valve according to Claim 12, **characterized in that** the whirl element (47) has a plurality of whirl ducts (63) which open tangentially into an internal whirl chamber (62).

14. Fuel injection valve according to Claim 13, **characterized in that** the whirl element (47) can be manufactured in one layer from a piece of sheet metal.

15. Fuel injection valve according to Claim 13, **characterized in that** the whirl element (47) is formed from a plurality of layers and can be manufactured by means of electroplating.

## Revendications

1. Injecteur de carburant pour une installation d'injection de carburant dans un moteur à combustion interne, notamment pour l'injection directe du carburant dans la chambre de combustion du moteur, comprenant un circuit électromagnétique, une aiguille (20) mobile axialement le long de l'axe longitudinal (8) de l'injecteur, cette aiguille ayant un segment d'obturation (28) coopérant avec un siège de soupape (27) fixe pour ouvrir et fermer l'injecteur, ce siège étant réalisé sur un élément à siège (26), avec un élément de guidage (35) séparé, prévu en amont de l'élément de siège de soupape (26) et ayant un orifice de guidage (55) intérieur, dans lequel l'aiguille (20) se déplace axialement, avec un ressort de compression (50), appliqué contre l'élément de guidage (35), ce ressort (50) étant monté par rapport à l'élément de guidage (35) pour que la tension du ressort de l'élément de guidage (35) agisse dans la direction d'action du ressort de compression (50) vers l'élément de siège de soupape (26) séparé, ainsi qu'un élément de turbulence (47), placé entre l'élément de guidage (35) et l'élément de siège de soupape (26) de façon que l'élément de guidage (35) soit poussé par le ressort de compression (50) directement contre l'élément de turbulence (47) et ce dernier contre l'élément de siège de soupape (26),
**caractérisé en ce que**
l'élément de turbulence (47) comporte des canaux de turbulence (63) ouverts vers l'élément de guidage (26) et qui sont couverts par l'élément de guidage (35) lorsque cet élément de guidage (35) est mis en tension par le ressort.

2. Injecteur selon la revendication 1,
**caractérisé en ce que**
l'élément de guidage (35) comporte une cavité centrale (52) du côté non tourné vers l'élément formant siège de soupape (26) pour recevoir le ressort de compression (50) s'appuyant contre le fond (53) de la cavité.

3. Injecteur selon la revendication 1,
**caractérisé en ce que**
l'élément de guidage (35) possède une surface frontale plane du côté opposé à l'élément formant siège de soupape (26), surface contre laquelle s'appuie le ressort de compression (50).

4. Injecteur selon l'une des revendications précédentes,
**caractérisé en ce que**
la périphérie extérieure de l'élément de guidage (35) comporte au moins un canal d'écoulement (69) en forme de rainure.

5. Injecteur selon l'une des revendications précédentes,
**caractérisé en ce que**
la périphérie extérieure de l'élément de guidage (35) comporte, du côté tourné vers les moyens générant la turbulence (47), un congé périphérique (56).

6. Injecteur selon l'une des revendications précédentes,
**caractérisé en ce que**
l'élément de guidage (35) est placé dans un orifice traversant (24) d'un support de siège de soupape (21), le jeu de l'élément de guidage (35) par rapport au support de siège de soupape (21) étant supérieur au jeu de l'aiguille d'injecteur (20) dans l'orifice de guidage (55).

7. Injecteur selon la revendication 6,
**caractérisé en ce que**
l'orifice traversant (24) du support de siège de soupape (21) comporte un épaulement (49) contre lequel s'appuie l'extrémité du ressort de compression (50) alors que son autre extrémité s'appuie contre l'élément de guidage (35).

8. Injecteur selon la revendication 6,
**caractérisé en ce que**
le support de siège de soupape (21) porte une rondelle d'appui (68), reliée solidairement, contre laquelle s'appuie une extrémité du ressort de compression (50), l'autre extrémité s'appuyant contre l'élément de guidage (35).

9. Injecteur selon l'une des revendications 1 à 3,
**caractérisé en ce que**
l'élément de guidage (35) est logé dans une cavité (86, 86') d'un élément d'appui (85) lui-même placé dans un orifice traversant (24) d'un support de siège de soupape (21), l'élément de support (85) ayant un second orifice de guidage (55') dans lequel l'aiguille (20) se déplace axialement.

10. Injecteur selon la revendication 9,
**caractérisé en ce que**
le premier orifice de guidage (55) de l'élément de guidage (35) a une dimension telle que l'aiguille (20) traverse cet orifice avec un jeu plus réduit que le second orifice de guidage (55') de l'élément d'appui (85).

11. Injecteur selon la revendication 10,
**caractérisé en ce que**
le jeu de l'aiguille (20) par rapport au premier orifice de guidage (55) est de l'ordre de 1 à 20 µm alors que le jeu par rapport au second orifice de guidage (55') est de l'ordre de grandeur de 20 à 100 µm.

12. Injecteur selon la revendication 1,
**caractérisé en ce que**
l'élément de turbulence (47) est en forme de disque.

13. Injecteur selon la revendication 12,
**caractérisé en ce que**
l'elément de turbulence (47) comporte plusieurs canaux de turbulence (63) débouchant tangentiellement dans une chambre de turbulence (62) centrale.

14. Injecteur selon la revendication 13,
**caractérisé en ce que**
l'élément de turbulence (47) est réalisé en une seule couche de tôle.

15. Injecteur selon la revendication 13,
**caracterisé en ce que**
l'élément de turbulence (47) a plusieurs couches et est obtenu par dépôt galvanique.
